# EUROPÄISCHE PATENTANMELDUNG

(11) **EP 0 933 020 A2**
(43) Veröffentlichungstag der Anmeldung: **04.08.1999**
(21) Anmeldenummer: 99101967.0
(22) Anmeldetag: 01.02.1999
(51) Int. Cl.: A01G 5/04

(54) **Halterung für Blumen oder dergleichen**

(30) Priorität: 31.01.1998 DE 29801536 U
(71) Anmelder: VOLKER GOERTZ PAPIER- UND KUNSTSTOFFVERARBEITUNG, D-38667 Bad Harzburg (DE)
(72) Erfinder: Goertz, Volker, 38667 Bad Harzburg (DE)
(74) Vertreter: Einsel, Martin, Dipl.-Phys.

(57) **Zusammenfassung**

Eine Halterung für Blumen oder dergleichen besitzt einen scheibenförmigen Grundkörper (5), der ein kegelförmiges Innenteil (2) umschließt, mit diesem aus einem Stück besteht und mit einer aus Krepp-Papier bestehenden Manschette (1) vernäht ist. Der Spitzenbereich des kegelförmigen Innenteils (2) weist Schlitze (4) auf, die im wesentlichen radial gerichtet und so lang bemessen sind, daß sie eine Öffnung zur Durchführung von Blumenstielen oder dergleichen bilden. Die Krepp-Papier-Manschette (1) reicht auf der der Kegelspitze abgewandten Seite des scheibenförmigen Grundkörpers (5) bis an den Übergang (7) von Scheibe (5) zu Kegel (2) heran und isu dort vernäht.

## Beschreibung

Die Erfindung betrifft eine Halterung für Blumen oder dergleichen.

Es sind Halterungen für Brautsträuße bekannt, bei denen ein stabiles Grundteil mit einer Manschette verbunden, verklebt oder vernäht ist. Solche Halterungen sind für übliche Blumensträuße nicht verwendbar. Beim Brautstrauß ist nämlich das stabile Grundteil mit einer relativ großen Innenöffnung versehen, in die ein gleichfalls stabiler Hohlgriff fest einschnappbar ist, in dessen Hohlraum die speziell gekürzten Stiele des kunstvollen Arrangements einsetzbar sind. Bei dieser bekannten Halterung wird das Gewicht der Blumen mit der stabilen Griff-Grundkörper-Verbindung gehalten. Der Griff ist außerdem kurz bemessen, weil eine Braut nicht mit einem voluminösen Brautstrauß belastet werden sollte. Übliche Blumensträuße werden zumeist mit lockeren, zuweilen durchsichtigen Hüllen versehen, wobei die Blumenstiele mit Papier fest umwickelt werden, um dem Käufer eine Griffmöglichkeit zu geben.

Der Erfindung liegt die Aufgabe zugrunde, eine neuartige, leichte und vielseitige Halterung für Blumensträuße zu schaffen. Diese Aufgabe wird durch die im Anspruch 1 definierte Erfindung gelöst. Weiterbildungen sind in den abhängigen Ansprüchen beschrieben.

Im Prinzip besteht die Erfindung darin, daß die Halterung für Blumen oder dergleichen einen scheibenförmigen Grundkörper aufweist, der ein kegelförmiges Innenteil umschließt und mit diesem aus einem Stück besteht, daß der scheibenförmige Grundkörper mit einer aus Krepp-Papier bestehenden Manschette vernäht ist, daß der Spitzenbereich des kegelförmigen Innenteils Schlitze aufweist, die im wesentlich radial gerichtet sind und so lang bemessen , daß sie eine Öffnung zur Durchführung von Blumenstielen oder dergleichen bilden, und daß die Krepp-Papier-Manschette auf der der Kegelspitze abgewandten Seite des scheibenförmigen Grundkörpers bis an den Übergang von Scheibe zu Kegel heranreicht und dort vernäht ist. Zum Vernähen der Krepp-Papier-Manschette mit dem scheibenförmigen Grundkörper ist eine Naht vorgesehen. Der scheibenförmige Grundkörper und sein kegelförmiges Innenteil bestehen aus dünnem Kunststoff. Das kegelförmige Teil ist durch Grate, Sicken oder dergleichen versteift .

Es ist zwar bekannt (EP 0592756 B1), für Topfmanschetten Krepp-Papier zu verwenden, doch stellt sich dort nicht die Aufgabe, Blumensträuße schön und praktikabel zu verpacken.

Zur näheren Erläuterung der Erfindung werden im folgenden mehrere Ansichten eines Ausführungsbeispiels anhand der Zeichnungen beispielsweise beschrieben. Diese zeigen in
Fig. 1 eine perspektivische Ansicht der Oberseite der Halterung,
Fig. 2 eine perspektivische Ansicht der Unterseite der Halterung,
Fig. 3 eine geschnittene Seitenansicht von Grundkörper und kegelförmigem Innenteil.

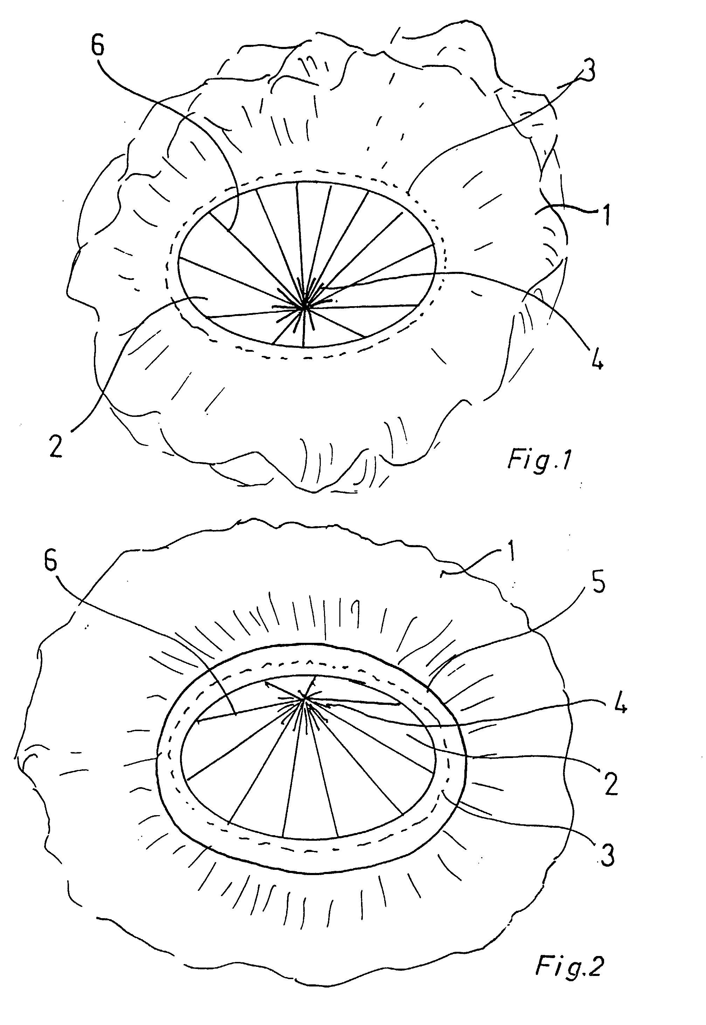

In **Fig. 1** ist eine perspektivische Ansicht der Oberseite einer Halterung für Blumen oder dergleichen mit einem in Fig. 1 von einer Manschette 1 verdeckten scheibenförmigen Grundkörper 5 dargestellt, der ein kegelförmiges Innenteil 2 umschließt und mit diesem aus einem Stück besteht, vorzugsweise aus dünnem Kunststoffmaterial. Der scheibenförmige Grundkörper 5 mit der aus Krepp-Papier bestehenden Manschette 1 vernäht. Der Spitzenbereich des in Fig 1 eine Öffnung bildenden kegelförmigen Innenteils 2 weist Schlitze 4 auf, die im wesentlich radial gerichtet und so lang bemessen sind, daß sie eine Öffnung zur Durchführung von Blumenstielen oder dergleichen bilden, wenn diese von der Öffnungsseite aus in das kegelförmige Teil 2 gedrückt werden. Die Krepp-Papier-Manschette 1 auf der Oberseite, also der der Kegelöffnung zugewandten und der Kegelspitze abgewandten Seite des scheibenförmigen Grundkörpers 5 reicht bis an den Übergang 7 von Scheibe 5 zu Kegel 2 heran und ist dort vernäht. Zu diesem Zweck, also zum Vernähen der Krepp-Papier-Manschette 1 mit dem scheibenförmigen Grundkörper 5 ist eine Naht 3 vorgesehen. Das kegelförmige Teil 2 ist durch Grate 6, Sicken oder dergleichen versteift, um der Halterung trotz des dünnen Kunststoffmaterials Halt zu geben.

**Fig. 2** zeigt eine perspektivische Ansicht der Unterseite der in Fig. 1 dargestellten Halterung. Hier ist erkennbar, daß die Krepp-Papier-Manschette oberhalb des scheibenförmigen Grundkörpers 5 angeordnet ist, in Fig.2 also von diesem verdeckt wird.

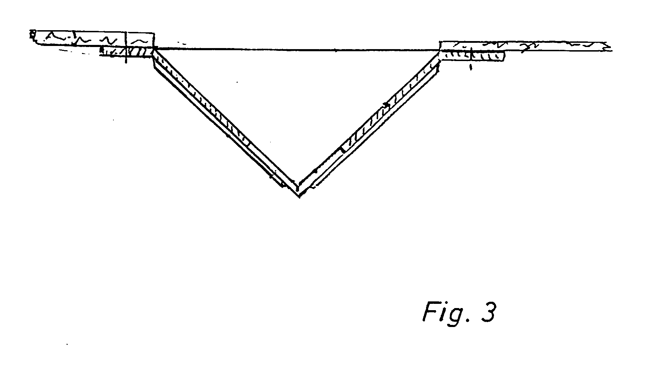

**Fig. 3** zeigt eine geschnittene Seitenansicht von Grundkörper 5 und kegelförmigem Innenteil 2. Hier ist erkennbar, daß der Winkel zwischen dem scheibenförmigen Grundkörper 5 und dem kegelförmigen Innenteil 2 beispielsweise 30 -60° beträgt. Bei diesem Winkel öffnen die Blumenstiele die Schlitze 4 in Fig. 2 leicht.

## Patentansprüche

1. Halterung für Blumen oder dergleichen mit einem scheibenförmigen Grundkörper (5), der ein kegelförmiges Innenteil (2) umschließt, mit diesem aus einem Stück besteht und mit einer aus Krepp-Papier bestehenden Manschette (1) vernäht ist, **bei der** der Spitzenbereich des kegelförmigen Innenteils (2) Schlitze (4) aufweist, die im wesentlich radial gerichtet und so lang bemessen sind, daß sie eine Öffnung zur Durchführung von Blumenstielen oder dergleichen bilden, **und bei der** die Krepp-Papier-Manschette (1) auf der der Kegelspitze abgewandten Seite des scheibenförmigen Grundkörpers (5) bis an den Übergang (7) von Scheibe (5) zu Kegel ( 2) heranreicht und dort vernäht ist.

2. Halterung nach Anspruch 1,
**dadurch gekennzeichnet,**
daß zum Vernähen der Krepp-Papier-Manschette (1) mit dem scheibenförmigen Grundkörper (5) eine Naht (3) vorgesehen ist.

3. Halterung nach Anspruch 1 oder 2,
**dadurch gekennzeichnet,**
daß das kegelförmige Teil (2) durch Grate (6), Sicken oder dergleichen versteift ist.

4. Halterung nach Anspruch 1, 2 oder 3,
**dadurch gekennzeichnet,**
daß der Winkel zwischen dem scheibenförmigen Grundkörper (5) und dem kegelförmigen Innenteil (2) 30-60° beträgt.
